# EUROPEAN PATENT APPLICATION

(11) **EP 1 258 854 A1**
(43) Date of publication of application: **20.11.2002**
(21) Application number: 01201859.4
(22) Date of filing: 17.05.2001
(51) Int. Cl.: G09F 7/22, G09F 23/06, B62B 3/14

(54) **Display system for a shopping cart, a method and use thereof**

(71) Applicant: Mathiasen, Elo, 8900 Randers (DK)
(72) Inventor: Mathiasen, Elo, 8900 Randers (DK)
(74) Representative: Elmeros, Claus

(57) **Abstract**

The invention relates to a display system (1) for a shopping cart (12) comprising a display area (3a), axle means, at least one connection (5) and at least one spring (6). The display area and said at least one connection are connected to said axle means and the ends of said at least one spring are connected to the display area and the at least one connection.

## Description

### Background of the invention

The present invention relates to a display system for a shopping cart, a method and use thereof.

Today's shopping carts are often equipped with different messages with commercial value placed by the owner of the shopping carts to influence the users of the carts. A usual situation is when a customer in a supermarket is using a shopping cart provided by the owner of the supermarket to transport his/her goods around in the store. Usually, the cart has plates with messages placed at the front, the bottom of the shopping compartment or at the sides of the cart. Further, the cart may have small messages with commercial value on the handle.

A problem with the known methods of placing messages on a shopping cart is the fact that the customer often places his/her goods in such a manner that the messages are partially or totally covered. Hereby, the visibility of the messages is significantly reduced.

Further, the customer is focussing on the surroundings beyond the front of the cart and does often not see the messages placed on the shopping cart.

The placing of the message is an even further problem since shopping causes the message to become dirty and scratched. Hereby, it becomes less appealing and harder to read.

Often, changing these messages is only possible if the plate holding the message is replaced by a new plate which involves a number of work actions. If the messages are held between two plates, changing of the messages will still be complicated and the plates and messages will be quite bulky.

One of the objects of the invention is to create a display system for carts which is visible during shopping. Another object is to create a system which is easy to use and by means of which it is especially easy to change messages.

### The invention

The objects of the invention are achieved by a display system for a shopping cart comprising a display area in which said display area and at least one connection are pivotally connected to an axle means and in which the ends of at least one spring are connected to the display area and the at least one connection.

The display system has the advantage of always being visible during shopping while storable in a compact manner when not in use.

Further, when the display system is in storage position, the surrounding carts will protect the system from being vandalized. This is especially advantageous since carts are often placed outside the store when not in use.

Even further, both sides of the display system may be used to display messages, allowing a display of the messages to the customer pushing the cart as well as to other customers at the same time.

In an embodiment of the invention, said at least one connection comprises a furnishing which makes it possible to connect the display system as a supplementary assembly unit to a standard/existing shopping cart.

It is, however, also possible to integrate the display system in a shopping cart when the axle to which the display area is pivotally connected is the front bar at the top of the cart. The connection to the cart may be established by welding or in another form by means of which the springs are directly connected to the cart, e.g. to the horizontal bars at the front part of the cart.

In a further embodiment, said at least one spring is a helical spring, shock absorbing means of a gas or oil-filled nature or a combination hereof.

Especially the fact that the springs may be wound around the axle ensures that the system may be kept compact and reliable. Other types of springs may be used such as laminated springs but with a less optimal result.

The use of one or more shock absorbers is advantageous since the movement may be made smoother and more uniform in its entire length.

Preferably, said display area comprises a plate-like material such as a piece of paper with commercial value which makes it possible to display a message to the user in his/hers direct field of vision thereby increasing the effect of the message. Further, the message will be in the user's field of vision when the user's mind is not occupied by other matters, e.g. when pushing the cart from a parking lot to the store and vice versa or waiting in a queue.

Preferably, said display area is partially or completely made of metal such as iron metal plates. Hereby, the created system increases durability.

It should be emphasized that the display area may also be made of a plastic material, wood, a composite material or any other suitable material.

In a further embodiment, said display area further comprises a transparent cover including a magnetic strip or Velcro. Hereby, it is possible to protect the plate-like material from damage and dirt. Further, it is possible to ensure that the plate-like material is not e.g. changed, damaged, removed or otherwise vandalised.

In the preferred embodiment of the invention, the display area may be moved by means of its pivotal connections at an angle of 0 to 270 degrees, and preferably 75 to 225 degrees. Hereby, it is possible to create a system which is visible in its upright position and which may be stored in an advantageous manner when not in use. The angle of 0 degrees should be understood as in a vertical, downwards direction in relation to the axle means and with the display area inside the cart. The movement of the display area towards an angle of max. 270 degrees is from inside the cart towards the rear of the cart.

In an embodiment, said display area has a height of 10 to 50 centimetres, and preferably 30 to 40 centimetres, it is possible to establish a display system which is clearly visible without compromising the user's ability to navigate the shopping cart.

In another embodiment, said display area has a width of 10 to 60 centimetres, and preferably 20 to 40 centimetres. Hereby, it is possible to establish a display system which is clearly visible without compromising the user's ability to navigate the shopping cart.

Further, the height and width of the display area messages allow more complex and detailed information to be displayed to the customer in a size large enough to be easily understandable from the customer's position.

### The figures

The invention will now be described in detail with reference to the drawings, in which
- fig. 1: shows a display system for a cart according to the invention,
- figs. 2a and 2b: show elements of the display system in detail,
- fig. 3: shows a cart with the display system, and

- fig. 4: shows a functionality of the display system.

### Detailed description

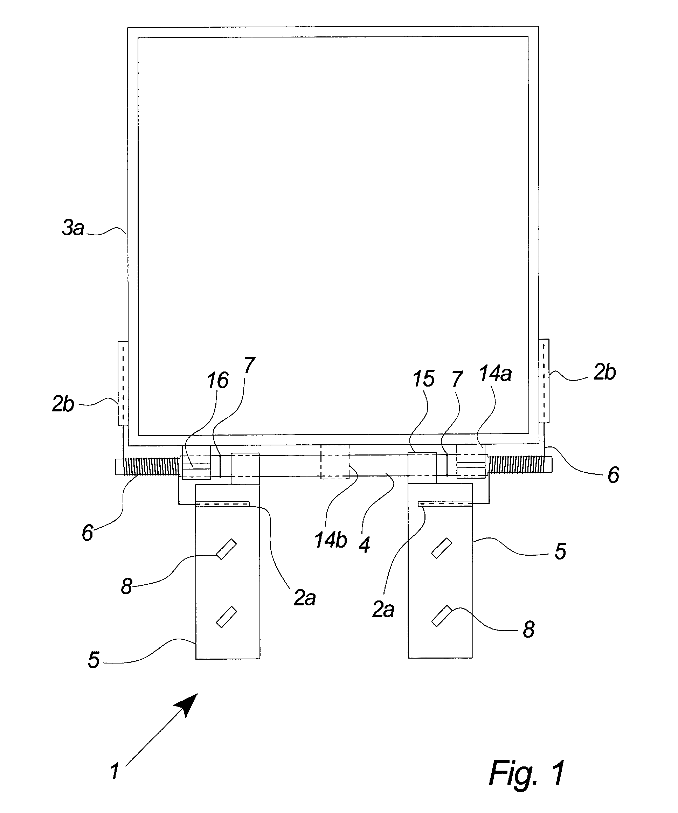

Fig. 1 shows a preferred embodiment of a display system 1 according to the invention. The display system is preferably used in connection with shopping carts.

The display system 1 comprises a display area 3a, an axle 4, two furnishings 5 and springs 6.

The display area 3a is connected to the axle 4 in two or more positions which are shown in fig. 1 by means of three connections. One of the connections 14b is illustrated by a dotted line to illustrate that it is optional in this embodiment. The axle connections 14a, 14b surround the axle and ensure that the connections are both safe and pivotal.

The axle connections 14a, 14b may comprise a stop 16 allowing the display area 3a only to move within a limited area.

The two furnishings 5 are also pivotally connected to the axle in two positions right next to display area connections.

Each of the helical springs 6 is connected to a furnishing 5 and the connection may be established by inserting the spring end into a cylinder part 2a welded onto the surface of the furnishing 5. The springs 6 are also connected to the display area 3a by means of cylinder parts 2b welded onto the sides of the display area 3a.

The axle 4 has at least one axle securing means 7 ensuring that the axle stays in place if force is added at one of the axle ends.

The furnishings 5 also have a number of mounting holes 8 allowing the display system 1 to be mounted onto e.g. a shopping cart.

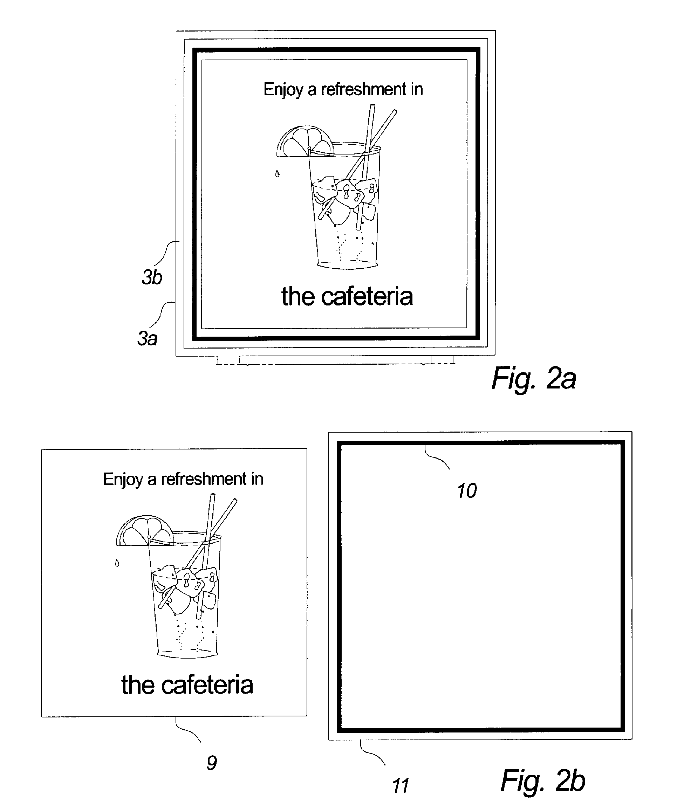

Figs. 2a and 2b show the display area 3a of the preferred embodiment from fig. 1 in detail. The display area 3a comprises a raised edge 3b that surrounds a plate-like material 9 such as a piece of paper with commercial value. To keep the plate-like material in place, a transparent plate 11 is positioned on top of the plate-like material 9. The transparent plate 11 is substantially identical in size with the area between the raised edges 3b. The transparent plate 11 may further comprise a magnetic strip 10 placed along the edges of the plate. The magnetic strip 10 secures the transparent plate 11 to the display area 3a since the display area is partially or completely made of metal such as thin iron plates.

The connection between the transparent plate 11 and the display area 3a with the raised edges 3b is so close that the plate cannot be removed without tools. To facilitate removal of the transparent plate 11 from the display area 3a, a sucking disc or a similar suction apparatus may be used.

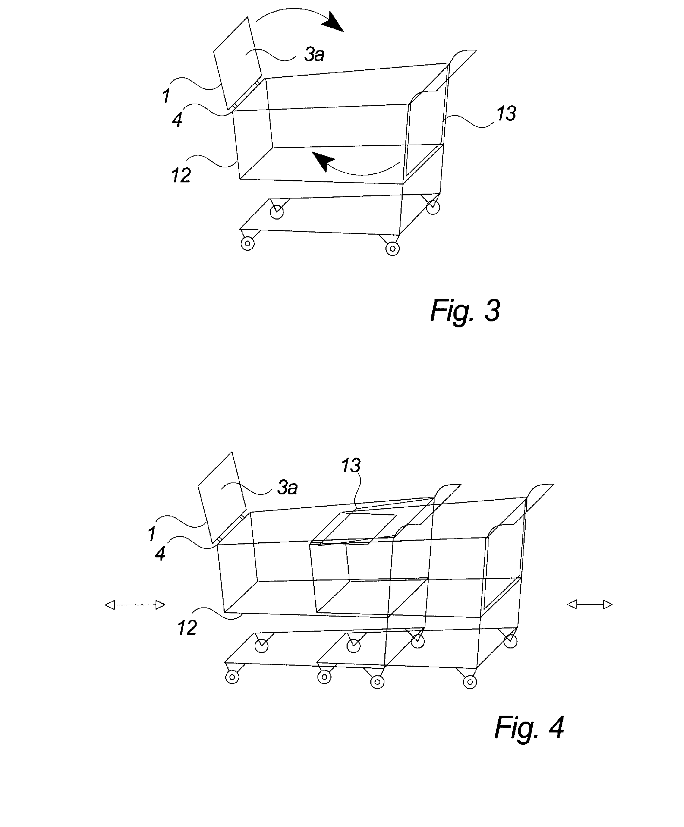

Fig. 3 shows the display system 1 mounted onto the front of a shopping cart 12. The shopping cart 12 is a standard cart comprising a back flap 13 pivotally mounted onto the rear end of the cart, among other things. The back flap allows carts to be packed together closely by pushing one cart into another whereby the cart being pushed pushes the back flap of the cart in front up to a substantially horizontal position.

Fig 4 shows the functionality of the display system when mounted onto a shopping cart:
- 1.: The customer pulls the first shopping cart out of a row of carts packed together.
- 2.: As the shopping cart is free of the row, the display system (as explained in connection with figs. 1 to 2b) is raised to an upright position by means of the springs.
- 3.: The customer does her/his shopping while being able to see the message placed on the display system at all times no matter how many goods she/he puts in the shopping cart.
- 4.: The customer has ended her/his shopping and pushes the shopping cart back into the row of carts. As the shopping cart is pushed, the display system is forced down to a substantially horizontal position by the back flap of the cart in front of the cart being pushed into the row.
- 5.: The display system is kept down as long as the cart stays in the row.

It should be emphasized that the above-mentioned embodiment may be subject to several variations within the scope of the invention. In one variation, the display system may comprise an electronic display e.g. similar in size to that of the display of a mobile telephone. The display may show various information to the user such as directions to special offers in the store. The display system will be disconnected from the battery power supply when the display system is moved to its horizontal storage position.

The display system may also include one or more locking means locking the display area in its upright position and hereby ensuring that the spring is not subject to the constant strain of the weight of the display area.

### List of reference number for the figures

- 1.: Display system
- 2a.: First spring holders
- 2b.: Second spring holders
- 3a.: Display area
- 3b.: Raised edges
- 4.: Axle
- 5.: Furnishing
- 6.: Helical spring
- 7.: Axle securing means
- 8.: Mounting holes
- 9.: Plate-like material such as a piece of paper with commercial value
- 10.: Magnetic strip
- 11.: Transparent cover
- 12.: Shopping cart
- 13.: Back flap of the cart
- 14a.: Axle connection for display area
- 14b.: Optional axle connection for display area
- 15.: Axle connection for furnishing
- 16.: Display motion stop

## Claims

1. Display system (1) for a shopping cart (12) comprising
a display area (3a),
**characterised in that**
said display area (3a) and at least one connection (5) are pivotally connected to an axle means (4) and **in that** the ends of at least one spring (6) are connected to the display area (3a) and the at least one connection (5).

2. Display system (1) according to claim 1, wherein said at least one connection (5) comprises a furnishing.

3. Display system (1) according to claim 1 or 2, wherein said at least one spring (6) is a helical spring, shock absorbing means of a gas or oil-filled type or a combination hereof.

4. Display system (1) according to any of claims 1 to 3, wherein said display area (3a) comprises a plate-like material (9) such as a piece of paper with commercial value.

5. Display system (1) according to any of claims 1 to 4, wherein said display area (3a) is partially or completely made of metal such as iron metal plates.

6. Display system (1) according to any of claims 1 to 5, wherein said display area (3a) further comprises a transparent cover (11) including a magnetic strip (10) or Velcro.

7. Display system (1) according to any of claims 1 to 6, wherein the display area (3a) may be moved by means of its pivotal connections (5) at an angle of 0 to 270 degrees, and preferably 75 to 225 degrees.

8. Display system (1) according to any of claims 1 to 7, wherein said display area (3a) has a height of 10 to 60 centimetres, and preferably 30 to 40 centimetres.

9. Display system (1) according to any of claims 1 to 8, wherein said display area (3a) has a width of 10 to 60 centimetres, and preferably 20 to 40 centimetres.

10. Method of displaying a message to the user of a shopping cart, said method comprising the steps of
releasing a shopping cart with a display system from a row of shopping carts,
raising the display area of said display system from storage position to use position by means of at least one spring connecting said display system and said shopping cart, and
displaying a message on said display area to the user when in use position.

11. Use of a display system (1) according to any of claims 1 to 9 and/or method according to claim 10 in relation to a shopping cart (12).
